# EUROPEAN PATENT APPLICATION

(11) **EP 4 807 207 A1**
(43) Date of publication of application: **16.09.2026**
(21) Application number: 26163153.5
(22) Date of filing: 09.03.2026
(51) Int. Cl.: F16D 43/21, F16D 7/02

(54) **LOW OFFSET DRIVE MOTOR ASSEMBLY FOR A POOL COVER**

(30) Priority: 11.03.2025 US 202563770272 P; 13.06.2025 US 202519237146
(71) Applicant: Explore Industries USA, Inc, Knoxville, TN 37914 (US)
(72) Inventor: BRIDGER, Kempton, Seymour, TN 37865 (US)
(74) Representative: Schlich

(57) **Abstract**

A low-offset drive motor system for a pool cover including an in-line torque limiter assembly dimensioned and configured to be positioned substantially within the rope reel of the drive motor system.

## Description

This application claims priority to co-pending U.S. Provisional Application Serial No. 63/770,272 filed March 11, 2025, entitled "Low Offset Drive Motor Assembly for a Pool Cover," the entire contents of which is incorporated herein by reference.

This disclosure relates to the field of pool covers. More particularly, this disclosure relates to a pool cover system having a low-offset drive motor assembly with an in-line torque coupler.

Automatic pool covers require an offset outside the pool envelope to house the drive motor and related components for the pool cover. The components of the drive motor assembly that determine the necessary offset are typically located in-line and include the motor drum connector, the gear shifter, rope reel, torque limiter (a.k.a., torque limiting coupler), and motor. Low-offset systems have been developed in which attempts have been made to minimize the offset needed by providing a drive motor assembly in a compact design. The aim of a low-offset system is to reduce the distance the drive unit extends beyond the inside edge of the pool cover track, which is typically located in-line with the inside edge of the pool.

For example, low-offset systems have been developed using motors positioned under the rope reel instead of in-line. In certain low-offset systems, compromises in pool cover features have also been made to provide a more compact motor system. For example, many low-offset systems have omitted the mechanical torque limiter in favor of sensors and electronic circuits designed to shut off the motor once the cover is at either end of the pool or a torque threshold is exceeded. However, these electronic torque limiters are prone to failure particularly in the wet environment of a pool. On the other hand, if a more traditional torque limiter is included, the torque limiter is located in-line between the motor and the rope reel, adding approximately two and a half inches to the offset required by the system.

Accordingly, what is needed is a low-offset pool cover motor assembly that provides a mechanical torque limiter without adding unnecessarily to the offset required. Further, it is desirable for the settings of the torque limiter to be easily adjusted as needed after installation of the motor assembly.

According to one embodiment of the disclosure, torque limiter assembly for a motorized pool cover system includes a spline shaft having a proximal end and a distal end, the spline shaft configured to be operatively connected to a drive motor of the motorized pool cover system for rotating the spline shaft. A torque coupler is operatively connected to the spline shaft adjacent the distal end of the spline shaft that is dimensioned and configured to be positioned substantially within a hollow interior of a rope reel of the motorized pool cover system. The torque coupler includes a disc assembly having at least one input disc, at least one output disc, and at least one friction disc disposed between the at least one input disc and the at least one output disc. The at least one input disc is operatively connected to the spline shaft such that rotation of the spline shaft causes a corresponding rotation of the at least one input disc. The at least one output disc is configured to be operatively connected to a shifting shaft such that rotation of the at least one output disc causes a corresponding rotation of the shifting shaft. During a standard operation, the at least one input disc transmits torque to the at least one output disc through the at least one friction disc causing a corresponding rotation of the at least one output disc. On the other hand, when a torque threshold is exceeded, the at least one input disc rotates independently of the at least one output disc and the at least one friction disc.

According to certain embodiments, the torque coupler further includes a torque limiter housing operatively connected to the at least one output disc. The torque coupler is configured to be operatively connected to the shifting shaft such that rotation of the at least one output disc causes a corresponding rotation of the torque limiter housing and rotation of the torque limiter housing causes a corresponding rotation of the shifting shaft.

According to some embodiments, the disc assembly is disposed within the torque limiter housing such that the at least one input disc is configured to rotate independently of the rotation of the torque limiter housing. According to some embodiments, the at least one output disc includes a plurality of protrusions extending around an outer periphery of the at least one output disc and the torque limiter housing includes a plurality of slots for engaging the plurality of protrusions of the at least one output disc for operatively connecting the torque limiter housing to the at least one output disc.

According to certain embodiments, a distal end of the spline shaft includes a plurality of protrusions and the at least one input disc includes an aperture having a plurality of corresponding notches. Each of the plurality of notches of the at least one input disc are configured to be inserted into one of the plurality of protrusions of the distal end of the spline shaft for operatively connecting the at least one input disc to the spline shaft.

According to certain embodiments, the disc assembly includes a plurality of input discs, a plurality of output discs, and a plurality of friction discs, each of the plurality of input discs and plurality of output discs having one of the plurality of friction discs disposed therebetween. According to some embodiments, the torque limiter assembly further includes a first spring washer disposed at a first end of the disc assembly and a second spring washer disposed at a second end of the disc assembly.

According to certain embodiments, the spline shaft includes a hollow interior and the torque limiter assembly further includes an adjustment bolt positioned within the hollow interior of the spline shaft. The adjustment bolt includes a proximal end having a tool engaging mechanism dimensioned and configured to traverse a frame of the motorized pool cover system for rotating the adjustment bolt independently of the spline shaft and a distal end operatively connected to the torque coupler such that rotation of the adjustment bolt is operable to adjust the torque threshold of the torque coupler. In some embodiments, the torque limiter assembly further includes an adjustment nut disposed adjacent a second end of the disc assembly. The adjustment nut is operatively connected to the distal end of the adjustment bolt such that rotation of the adjustment bolt is operable to adjust the torque threshold of the torque coupler by adjusting a compression force between the at least one input disc, the at least one output disc, and the at least one friction disc of the disc assembly.

According to another embodiment of the disclosure, a drive motor system for a pool cover includes a drive motor, a torque limiter assembly, a shifting gear assembly, and a rope reel. The torque limiter assembly includes a spline shaft having a proximal end and a distal end. The spline shaft is operatively connected to the drive motor adjacent the proximal end for rotating the spline shaft. A torque coupler is operatively connected to the spline shaft adjacent the distal end of the spline shaft. The torque coupler includes a drive mechanism, a driven mechanism, and a torque threshold such that rotation of the spline shaft causes a corresponding rotation of the drive mechanism and, so long as the torque threshold is not exceeded, rotation of the drive mechanism causes a corresponding rotation of the driven mechanism. The shifting gear assembly includes a shifting shaft having a proximal end operatively connected to the torque coupler such that rotation of the driven mechanism is operable to rotate the shifting shaft. The rope reel is operatively connected to the shifting gear assembly such that rotation of the shifting shaft is operable to rotate the rope reel. The torque coupler is positioned substantially within a hollow interior of the rope reel.

According to certain embodiments, the shifting gear assembly is positioned substantially within the hollow interior of the rope reel.

According to certain embodiments, the spline shaft of the torque limiter assembly includes a hollow interior. The torque limiter assembly further includes an adjustment bolt positioned within the hollow interior of the spline shaft. The adjustment bolt includes a proximal end having a tool engaging mechanism dimensioned and configured to traverse a frame of the drive motor system for rotating the adjustment bolt independently of the spline shaft and a distal end operatively connected to the torque coupler such that rotation of the adjustment bolt is operable to adjust the torque threshold of the torque coupler. In some embodiments, the torque limiter assembly further includes an adjustment nut disposed adjacent a second end of the torque coupler with the adjustment nut operatively connected to the distal end of the adjustment bolt such that rotation of the adjustment bolt is operable to adjust the torque threshold of the torque coupler.

According to certain embodiments, the drive motor system further includes a motor drum connector operatively connected to a distal end of the shifting shaft.

According to certain embodiments, the torque coupler further includes a disc assembly including a plurality of input discs for forming the drive mechanism, a plurality of output discs for forming the driven mechanism, and a plurality of friction discs. Each of the plurality of input discs and plurality of output discs include one of the plurality of friction discs disposed therebetween.

According to some embodiments, the torque coupler further includes a first spring washer disposed at a first end of the disc assembly and a second spring washer disposed at a second end of the disc assembly.

According to some embodiments, the torque limiter assembly further includes a torque limiter housing operatively connected to the plurality of output discs and the shifting shaft such that rotation of the plurality of output discs causes a corresponding rotation of the torque limiter housing and rotation of the torque limiter housing causes a corresponding rotation of the shifting shaft.

According to some embodiments, the disc assembly is disposed within the torque limiter housing such that the plurality of input discs and the plurality of friction discs are configured to rotate independently of the rotation of the torque limiter housing.

According to some embodiments, the plurality of output discs each include at least one protrusion extending around an outer periphery of the plurality of output discs and the torque limiter housing includes at least one slot for engaging the at least one protrusion of each of the plurality of output discs for operatively connecting the torque limiter housing to the plurality of output discs.

According to some embodiments, the distal end of the spline shaft includes at least one protrusion and each of the plurality of input discs includes an aperture having at least one corresponding notch configured to be inserted into the at least one protrusion of the distal end of the spline shaft for operatively connecting the plurality of input discs to the spline shaft.

### BRIEF DESCRIPTION OF THE DRAWINGS

Other embodiments of the disclosure will become apparent by reference to the detailed description in conjunction with the figures, wherein elements are not necessarily to scale so as to more clearly show the details, wherein like reference numbers indicate like elements throughout the several views, and wherein:
FIG. 1 depicts a front perspective view of a low-offset drive motor assembly according to one embodiment of the disclosure.
FIG. 2 depicts a front exploded view of the components of the low-offset drive motor assembly of FIG. 1 according to one embodiment of the disclosure.
FIG. 3 depicts a front perspective view of a torque limiter assembly according to one embodiment of the disclosure.
FIG. 4 depicts a front exploded view of the components of the torque limiter assembly of FIG. 3.
FIG. 5 depicts a cross-sectional view of the torque limiter assembly of FIGS. 3-4 according to one embodiment of the disclosure.
FIG. 6 depicts a perspective view of a torque limiter assembly with a partially exploded disc assembly as arranged with respect to a distal end of the spline shaft according to one embodiment of the disclosure.
FIG. 7 depicts an exploded perspective view of a torque limiter assembly and shifting gear assembly according to one embodiment of the disclosure.
FIG. 8 depicts a perspective view of an assembled torque limiter assembly, shifting gear assembly, rope reel, and motor drum connector according to one embodiment of the disclosure.
FIG. 9 depicts a partial cross-sectional view of the torque limiter assembly and shifting gear assembly disposed within a rope reel and operatively connected to the motor drum connector according to one embodiment of the disclosure.

### DETAILED DESCRIPTION

The present disclosure as described herein provides a drive motor system for a pool cover with a torque limiter and a gear shifter disposed substantially inside the rope reel. Incorporating the torque limiter and gear shifter within the rope reel reduces the offset of the present assembly to approximately only 16 inches or less in preferred embodiments. Further, the drive motor system of the present disclosure provides an adjustment bolt that is accessible from outside the system to easily adjust the torque limit settings without needing to access the torque limiter directly.

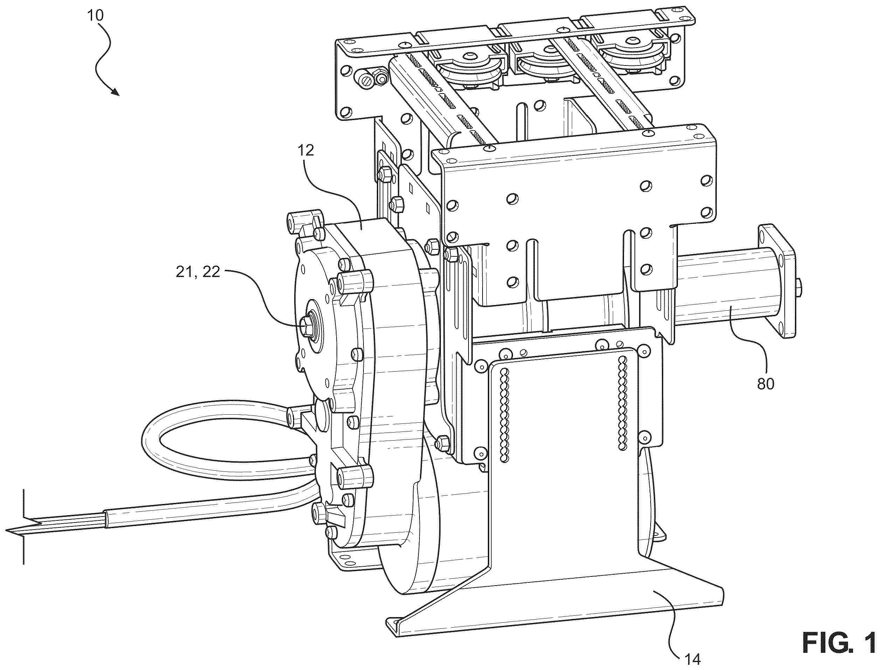

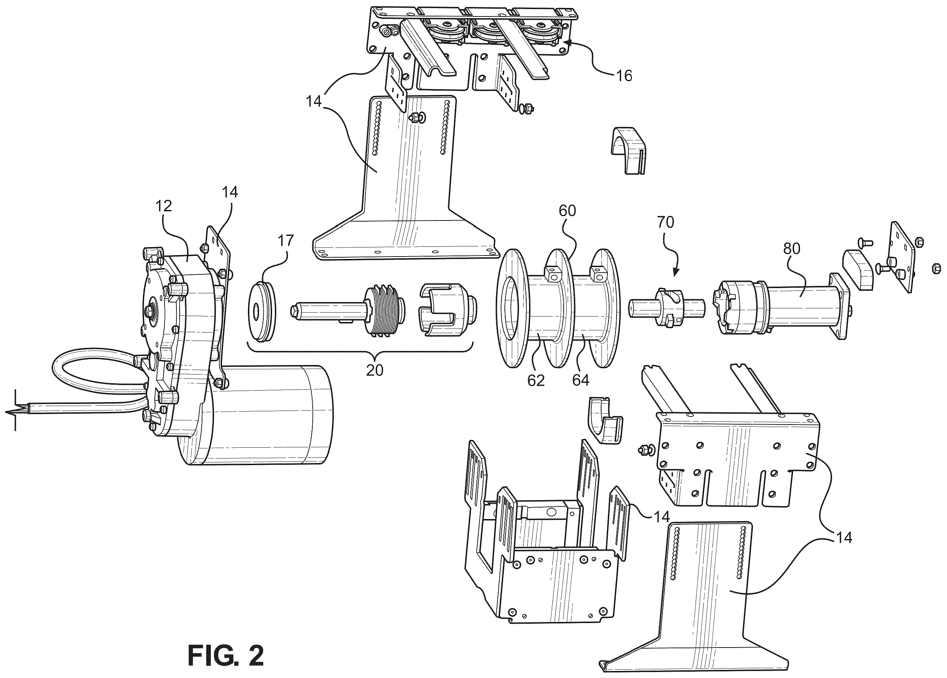

With reference to FIGS. 1-2, a low-offset drive motor system 10 for a motorized pool cover is depicted according to one embodiment of the present disclosure. With reference more specifically to the exploded view of FIG. 2, the drive motor system 10 generally includes a drive motor 12, a torque limiter assembly 20, a rope reel 60, a shifting gear assembly 70, and a motor drum connector 80. As shown, the various components of the drive motor system 10 are supported and protected within a support frame 14. As known in the art, a first rope and a second rope are wrapped around respective outer sections 62 and 64 of the rope reel 60 and directed through a pulley system 16 connected to the support frame 14 and the pool cover track (not shown). The first rope and second rope are attached at their opposite ends to opposing leading edges of a pool cover (not shown). In operation, the drive motor system 10 is operated by rotation of the motor 12. Depending on the rotation direction of the motor 12, the ropes are either pulled onto the reel 60 to close the cover or released from the reel 60 while the cover is opened. Conversely, as the motor 12 rotates, the cover material is either pulled onto the drum (not shown) driven by the motor drum connector 80 to open the cover or released from the drum while the cover is being closed.

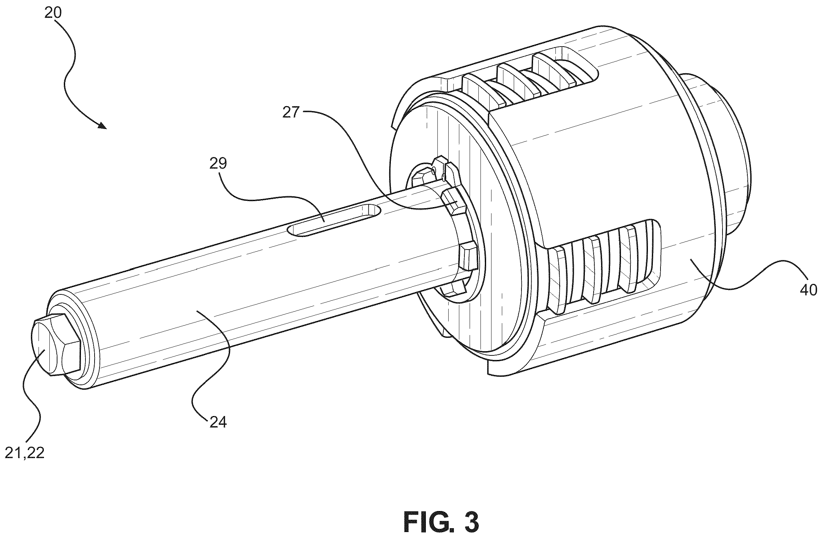

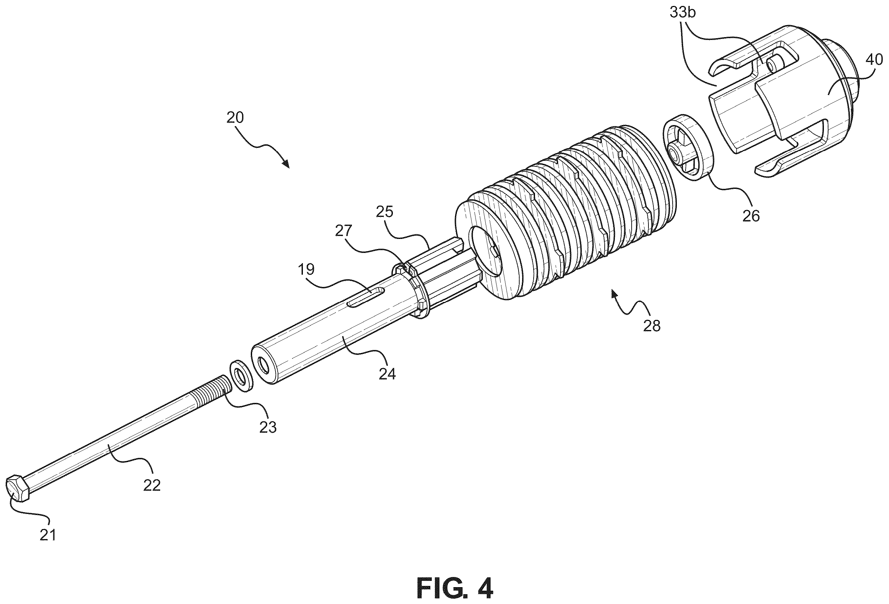

With reference to FIG. 3-5, a torque limiter assembly 20 is depicted according to one embodiment of the present disclosure. The torque limiter assembly 20 generally includes an adjustment bolt 22 having a hex head or other tool engaging mechanism at a proximal end 21 and threads at a distal end 23. The distal end 23 of the adjustment bolt 22 is inserted through a hollow spline shaft 24 with the threads connected to corresponding threads of an adjustment nut 26. The distal end 25 of the spline shaft 24 is dimensioned and configured to receive a torque limiting coupler 28. The torque limiting coupler 28 generally includes a drive mechanism, a driven mechanism, and a torque threshold. In operation, rotation of the spline shaft 24 causes a corresponding rotation of the drive mechanism. Rotation of the drive mechanism then causes a corresponding rotation of the driven mechanism so long as the torque threshold is not exceeded. By operatively connecting the torque coupler 28 at the distal end of the spline shaft 24, the torque coupler 28 is positioned and configured to be positioned substantially (or fully) within a hollow interior of the rope reel 60 such that the offset of the motor system 10 is able to be reduced.

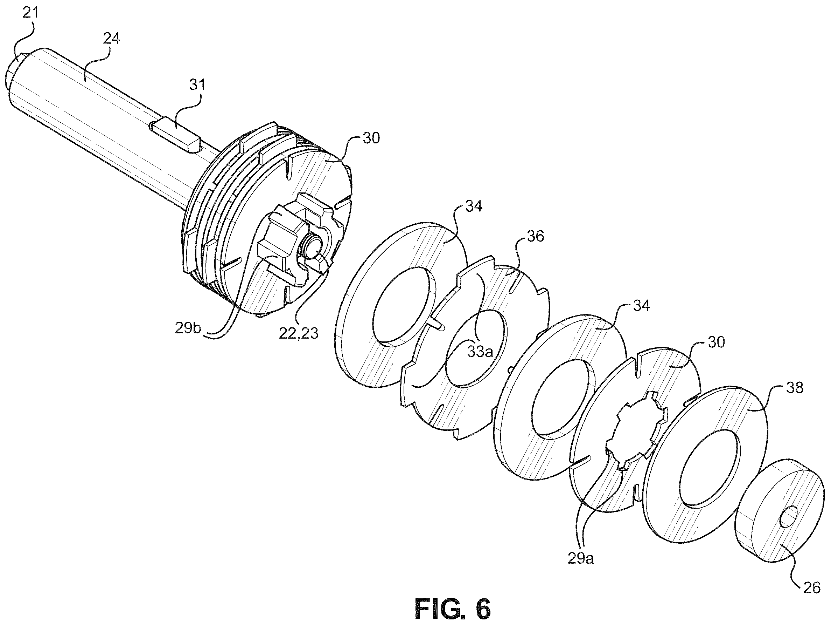

While various forms of the torque limiting coupler may be utilized within the scope of the present disclosure, the torque limiting coupler is preferably a disc assembly 28 formed of at least one input disc 30 that operates as the drive mechanism, at least one output disc 36 that operates as the driven mechanism, and at least one friction disc 34 disposed between the input disc 30 and output disc 36. As shown best in FIG. 6, the disc assembly 28 more preferably includes a series of input discs 30, friction discs 34, and output discs 36. The spring washers 38 are disposed at opposing ends of the disc assembly 28. Rotation of the input discs 30 is locked with the distal end 25 of the spline shaft 24 via mating notches 29a of the input discs 30 and protrusions 29b of the spline shaft 24. The friction discs 34, output discs 36, and spring washers 38 are positioned and configured to rotate freely on the spline shaft 24 in absence of friction in the disc assembly 28. In this regard, as shown, the friction discs 34 are sandwiched between the input discs 30 and output discs 36. The disc assembly 28 is then adjustably pressed against a retaining ring 27 or other protruding rim on the spline shaft by the adjustment nut 26. In certain embodiments, a first spring washer 38 is disposed at the first end of the disc assembly 28 adjacent to the spline shaft retaining ring 27 and a second spring washer 38 is disposed at the second end of the disc assembly 28 adjacent to the adjustment nut 26. A torque limiter housing 40 is then positioned around the adjustment nut 26 and disc assembly 30 with only the output discs 38 configured to engage the housing 40. In other words, the adjustment nut 26, input discs 30, friction discs 34, and spring washers 38 are capable of rotating independently of the torque limiter housing 40 when the torque threshold of the torque limiter assembly 20 is exceeded as explained further below.

According to certain embodiments, slots are included in the outer perimeter of the input discs 30 and output discs 36 as shown in FIG. 6 to allow brake dust to escape the contact friction surfaces.

In operation, the spline shaft 24 is configured to be rotated by the drive motor 12. For example, the shaft 24 of the embodiment depicted includes a key slot 19 that is able to be engaged by a corresponding engaging mechanism 31 (see FIG. 6) of the drive motor 12 when the proximal end of the spline shaft 24 is inserted into the drive motor 12. During normal operation (i.e., movement of the pool cover within a certain torque threshold), the input discs 30 are rotated by the spline shaft 24. The input discs 30 then transmit torque to the output discs 36 through the compression against the friction discs 34. Rotation of the output discs 36 causes simultaneous rotation of the torque limiter housing 40. On the other hand, when the torque threshold is exceeded (e.g., the pool cover or one of its components becomes jammed or stuck), the friction discs 34 slip between the input discs 30 and output discs 36 such that rotation of the input discs 30 is unable to transmit sufficient torque to the output discs 36. Accordingly, so long as the torque of the system is within acceptable limits, the disc assembly 30 rotates as a unit with the spline shaft 24 causing the output discs 36 to translate rotation to the torque limiter housing 40. However, if the torque threshold is exceeded, the input discs 30 rotate independently from the output discs 36 such that the torque limiter housing 40 does not rotate in conjunction with the spline shaft 24. For purposes of the present disclosure, "rotate independently" refers to individual movement of the respective components instead of simultaneous rotation as a unit and could include a situation where one of the components does not rotate at all (i.e., the input discs 30 would be considered to "rotate independently" from the output discs 36 when the torque threshold is exceeded whether or not there is any rotation of the output discs 36).

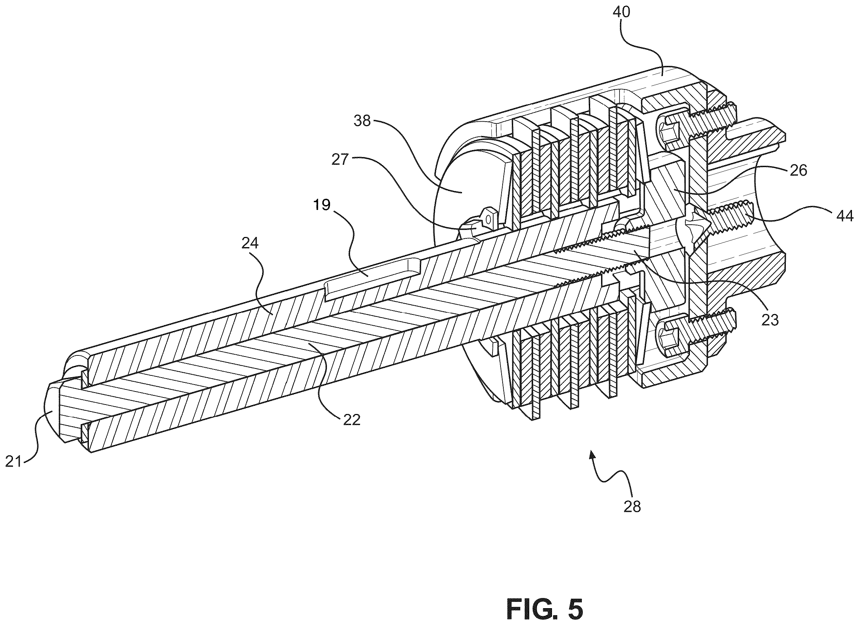

With reference to the cross-sectional view of FIG. 5, the torque threshold of the torque limiter assembly 20 may be adjusted by advancing or withdrawing the adjustment nut 26 with respect to the threaded distal end 23 of adjustment bolt 22. In this regard, advancing the adjustment nut 26 further onto the threaded distal end 23 further compresses the discs of the disc assembly 30 against each other while withdrawing the adjustment nut 26 in the opposite direction reduces the compression between the discs of the disc assembly 30. Thus, the compression of the discs caused by the adjustment nut 26 may be adjusted to limit how much torque is able to be transmitted from the motor to the rest of the components of the assembly during operation. With reference back to FIG. 1, the tool engaging mechanism disposed at the proximal end 21 of the adjustment bolt 22 preferably traverses the frame 14 and motor 12 components such that it is accessible from outside the drive motor system 10 for quick and easy adjustments of the torque threshold as needed and desired.

With reference again to FIG. 6 depicting a partially exploded view of the disc assembly 30 in combination with the spline shaft 24, each of the input discs 30, friction discs 34, output discs 36, and spring washers 38 include apertures for positioning the discs around the distal end 25 of the spline shaft 24. In this exemplary embodiment, the input discs 30 include a plurality of engaging mechanisms 29a (e.g., notches) disposed around the inside periphery of the aperture wall. The engaging mechanism 29a of the input discs 30 are dimensioned and configured to receive corresponding engaging mechanisms 29b (e.g., protrusions) of the distal end 25 of the spline shaft 24. Thus, upon rotation of the spline shaft 24, the engaging mechanisms 29b of the spline shaft 24 engage the corresponding engaging mechanisms 29a of the input discs 30 to cause rotation of the input discs 30 in the same direction as the rotation of the spline shaft 24. Relatedly, the output discs 36 include engaging mechanisms 33a (e.g., protrusions) extending from the outer periphery of the output discs 36. With reference to FIGS. 3-5, the engaging mechanisms 33a of the output discs 36 are dimensioned and configured to engage corresponding engaging mechanisms 33b of the torque limiter housing 40. Thus, upon rotation of the output discs 36, the engaging mechanisms 33a of the output discs 36 engage the engaging mechanisms 33b of the torque limiter housing 40 to cause rotation of the torque limiter housing 40 (which then causes rotation of the shifting shaft 72 as further explained below).

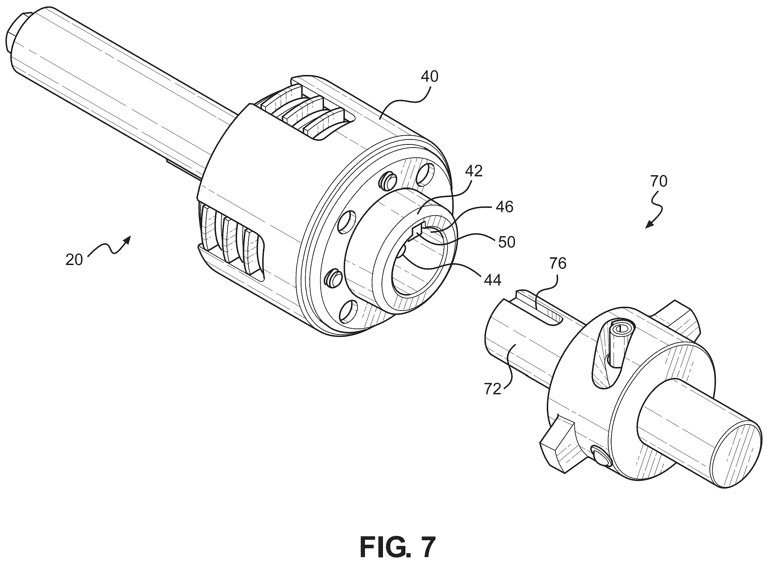

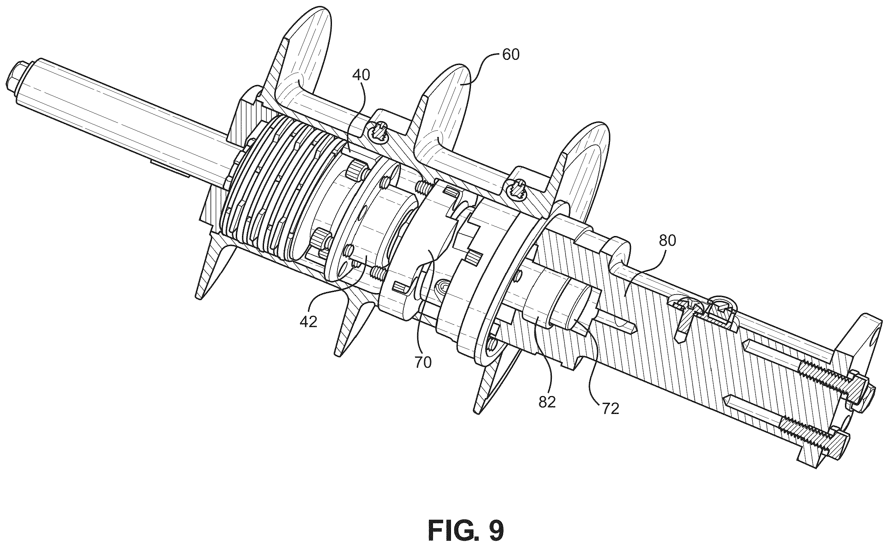

With reference to FIG. 7, the torque limiter housing 40 includes a shaft collar 42 that is configured to be secured to the shifting shaft 72 of the shifting gear assembly 70. Thus, rotation of the torque limiter housing 40 causes a corresponding rotation of the shifting shaft 72. For example, in the embodiment shown, the shaft collar 42 includes a screw 44 or similar fastening mechanism that is screwed into a threaded proximal end of the shifting shaft 72 for securing the torque limiter housing 40 to the shifting gear assembly. The shaft collar 42 and shifting shaft 72 may further include corresponding slots 46 and 76 for receiving a corresponding key 50 that will lock the housing 40 and shifting shaft 72 rotationally together. More specifically, according to this embodiment, the screw 44 holds the shaft 72 tight to the housing 40 so they cannot drift apart while the key 50 locks the housing 40 and shifting shaft 72 rotationally together. While the torque limiter housing 40 and shifting shaft 72 are held tightly together, the torque limiter housing 40 is able to float with minimal play between the torque limiter cap 17 (see FIG. 2) and a bushing in the hollow interior of the rope reel 60 (see FIG. 9). This configuration keeps the shifting gear assembly 70 correctly located between the two single dog gears.

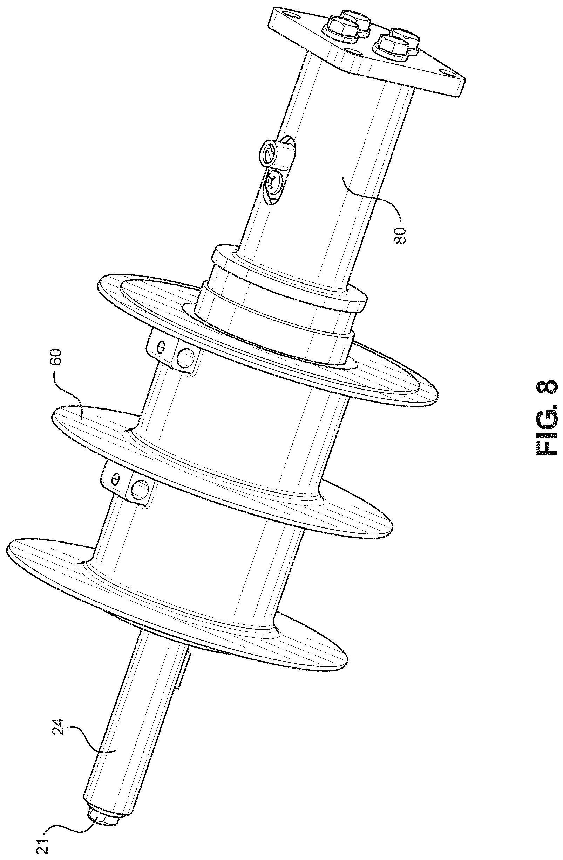

With reference to FIGS. 8-9, the motor drum connector 80 is operatively connected to the opposite side of the shifting shaft 72 as compared to the torque limiter housing 40. The motor drum connector 80 transfers the rotational force from the shifting gear assembly 70 to the end of the connector 80 where it attaches to a hub inside the roll-up tube that spans the width of the pool. The pool cover fabric is rolled up on to the tube as known in the art such that the pool cover is operable to be deployed from the tube or rolled up on the tube depending on the direction of rotation of the tube caused by the motor 12 and shifting gear assembly 70. As shown, the motor drum connector 80 also supports the end of the shifting shaft 72 inside the drum connector 80 with a bushing 82 disposed between the surfaces thereof to reduce the friction between the two rotating parts. Further, the drum connector 80 supports the distal end of the rope reel 60.

Advantages of the drive motor system 10 of the present disclosure include the ability to provide a mechanical torque limiter for protecting the motorized system from too much stress all within a compact and low-offset design. In this regard, the present drive motor system 10 includes a low-offset and compact design as a result of the torque limiter assembly 20 and shifting gear assembly 70 being designed to fit substantially within a hollow interior of the rope reel 60.

Features disclosed herein are further described by way of the following numbered paragraphs of embodiments:
1. A torque limiter assembly for a motorized pool cover system, the torque limiter assembly comprising:
   a spline shaft having a proximal end and a distal end, the spline shaft configured to be operatively connected to a drive motor of the motorized pool cover system for rotating the spline shaft; and
   a torque coupler operatively connected to the spline shaft adjacent the distal end of the spline shaft and dimensioned and configured to be positioned substantially within a hollow interior of a rope reel of the motorized pool cover system, the torque coupler including a disc assembly having at least one input disc, at least one output disc, and at least one friction disc disposed between the at least one input disc and the at least one output disc, wherein:
      the at least one input disc is operatively connected to the spline shaft such that rotation of the spline shaft causes a corresponding rotation of the at least one input disc,
      the at least one output disc is configured to be operatively connected to a shifting shaft such that rotation of the at least one output disc causes a corresponding rotation of the shifting shaft,
      during a standard operation, the at least one input disc transmits torque to the at least one output disc through the at least one friction disc causing a corresponding rotation of the at least one output disc, and
   when a torque threshold is exceeded, the at least one input disc rotates independently of the at least one output disc and the at least one friction disc.

2. The torque limiter assembly of embodiment 1, wherein the torque coupler further includes a torque limiter housing operatively connected to the at least one output disc and configured to be operatively connected to the shifting shaft such that rotation of the at least one output disc causes a corresponding rotation of the torque limiter housing and rotation of the torque limiter housing causes a corresponding rotation of the shifting shaft.

3. The torque limiter assembly of embodiment 1 or embodiment 2, wherein the disc assembly is disposed within the torque limiter housing such that the at least one input disc is configured to rotate independently of the rotation of the torque limiter housing.

4. The torque limiter assembly of embodiment 3, wherein the at least one output disc includes a plurality of protrusions extending around an outer periphery of the at least one output disc and the torque limiter housing includes a plurality of slots for engaging the plurality of protrusions of the at least one output disc for operatively connecting the torque limiter housing to the at least one output disc.

5. The torque limiter assembly of any of embodiments 1 to 4, wherein a distal end of the spline shaft includes a plurality of protrusions and the at least one input disc includes an aperture having a plurality of corresponding notches, each of the plurality of notches of the at least one input disc being configured to be inserted into one of the plurality of protrusions of the distal end of the spline shaft for operatively connecting the at least one input disc to the spline shaft.

6. The torque limiter assembly of any of embodiments 1 to 5, wherein the disc assembly includes a plurality of input discs, a plurality of output discs, and a plurality of friction discs, each of the plurality of input discs and plurality of output discs having one of the plurality of friction discs disposed therebetween.

7. The torque limiter assembly of any of embodiments 1 to 6 further comprising a first spring washer disposed at a first end of the disc assembly and a second spring washer disposed at a second end of the disc assembly.

8. The torque limiter assembly of any of embodiments 1 to 7, wherein the spline shaft includes a hollow interior, the torque limiter assembly further including an adjustment bolt positioned within the hollow interior of the spline shaft, the adjustment bolt including a proximal end having a tool engaging mechanism dimensioned and configured to traverse a frame of the motorized pool cover system for rotating the adjustment bolt independently of the spline shaft and a distal end operatively connected to the torque coupler such that rotation of the adjustment bolt is operable to adjust the torque threshold of the torque coupler.

9. The torque limiter assembly of embodiment 8 wherein the torque limiter assembly further includes an adjustment nut disposed adjacent a second end of the disc assembly, the adjustment nut operatively connected to the distal end of the adjustment bolt such that rotation of the adjustment bolt is operable to adjust the torque threshold of the torque coupler by adjusting a compression force between the at least one input disc, the at least one output disc, and the at least one friction disc of the disc assembly.

10. A drive motor system for a pool cover, the drive motor system comprising:
a drive motor;
a torque limiter assembly, the torque limiter assembly including:
   a spline shaft having a proximal end and a distal end, the spline shaft
      operatively connected to the drive motor adjacent the proximal end for rotating the spline shaft, and
   a torque coupler operatively connected to the spline shaft adjacent the distal end of the spline shaft, the torque coupler including a drive mechanism, a driven mechanism, and a torque threshold such that rotation of the spline shaft causes a corresponding rotation of the drive mechanism and, so long as the torque threshold is not exceeded, rotation of the drive mechanism causes a corresponding rotation of the driven mechanism;
   a shifting gear assembly including a shifting shaft having a proximal end operatively connected to the torque coupler such that rotation of the driven mechanism is operable to rotate the shifting shaft; and
a rope reel operatively connected to the shifting gear assembly such that rotation of the shifting shaft is operable to rotate the rope reel,
wherein the torque coupler is positioned substantially within a hollow interior of the rope reel.

11. The drive motor system of embodiment 10 wherein the shifting gear assembly is positioned substantially within the hollow interior of the rope reel.

12. The drive motor system of embodiment 9 or embodiment 10, wherein the spline shaft of the torque limiter assembly includes a hollow interior, the torque limiter assembly further including an adjustment bolt positioned within the hollow interior of the spline shaft, the adjustment bolt including a proximal end having a tool engaging mechanism dimensioned and configured to traverse a frame of the drive motor system for rotating the adjustment bolt independently of the spline shaft and a distal end operatively connected to the torque coupler such that rotation of the adjustment bolt is operable to adjust the torque threshold of the torque coupler.

13. The drive motor system of embodiment 12 wherein the torque limiter assembly further includes an adjustment nut disposed adjacent a second end of the torque coupler, the adjustment nut operatively connected to the distal end of the adjustment bolt such that rotation of the adjustment bolt is operable to adjust the torque threshold of the torque coupler.

14. The drive motor system of any of embodiments 10 to 13 further comprising a motor drum connector operatively connected to a distal end of the shifting shaft.

15. The drive motor system of any of embodiments 10 to 13, wherein the torque coupler further includes a disc assembly including a plurality of input discs for forming the drive mechanism, a plurality of output discs for forming the driven mechanism, and a plurality of friction discs, each of the plurality of input discs and plurality of output discs having one of the plurality of friction discs disposed therebetween.

16. The drive motor system of embodiment 15 wherein the torque coupler further includes a first spring washer disposed at a first end of the disc assembly and a second spring washer disposed at a second end of the disc assembly.

17. The drive motor system of embodiment 15 or embodiment 16, wherein the torque limiter assembly further includes a torque limiter housing operatively connected to the plurality of output discs and the shifting shaft such that rotation of the plurality of output discs causes a corresponding rotation of the torque limiter housing and rotation of the torque limiter housing causes a corresponding rotation of the shifting shaft.

18. The drive motor system of any of embodiments 15 to 17 wherein the disc assembly is disposed within the torque limiter housing such that the plurality of input discs and the plurality of friction discs are configured to rotate independently of the rotation of the torque limiter housing.

19. The drive motor system of embodiment 17 or embodiment 18 wherein the plurality of output discs each include at least one protrusion extending around an outer periphery of the plurality of output discs and the torque limiter housing includes at least one slot for engaging the at least one protrusion of each of the plurality of output discs for operatively connecting the torque limiter housing to the plurality of output discs.

20. The drive motor system of embodiment 19 wherein the distal end of the spline shaft includes at least one protrusion and each of the plurality of input discs includes an aperture having at least one corresponding notch configured to be inserted into the at least one protrusion of the distal end of the spline shaft for operatively connecting the plurality of input discs to the spline shaft.

The foregoing description of preferred embodiments for this disclosure have been presented for purposes of illustration and description. They are not intended to be exhaustive or to limit the disclosure to the precise form disclosed. Obvious modifications or variations are possible in light of the above teachings. The embodiments are chosen and described in an effort to provide the best illustrations of the principles of the disclosure and its practical application, and to thereby enable one of ordinary skill in the art to utilize the disclosure in various embodiments and with various modifications as are suited to the particular use contemplated. All such modifications and variations are within the scope of the disclosure as determined by any claims when interpreted in accordance with the breadth to which they are fairly, legally, and equitably entitled.

## Claims

1. A torque limiter assembly for a motorized pool cover system, the torque limiter assembly comprising:
a spline shaft having a proximal end and a distal end, the spline shaft configured to be operatively connected to a drive motor of the motorized pool cover system for rotating the spline shaft; and
a torque coupler operatively connected to the spline shaft adjacent the distal end of the spline shaft and dimensioned and configured to be positioned substantially within a hollow interior of a rope reel of the motorized pool cover system, the torque coupler including a disc assembly having at least one input disc, at least one output disc, and at least one friction disc disposed between the at least one input disc and the at least one output disc, wherein:
the at least one input disc is operatively connected to the spline shaft such that rotation of the spline shaft causes a corresponding rotation of the at least one input disc,
the at least one output disc is configured to be operatively connected to a shifting shaft such that rotation of the at least one output disc causes a corresponding rotation of the shifting shaft,
during a standard operation, the at least one input disc transmits torque to the at least one output disc through the at least one friction disc causing a corresponding rotation of the at least one output disc, and
when a torque threshold is exceeded, the at least one input disc rotates independently of the at least one output disc and the at least one friction disc.

2. The torque limiter assembly of claim 1, wherein the torque coupler further includes a torque limiter housing operatively connected to the at least one output disc and configured to be operatively connected to the shifting shaft such that rotation of the at least one output disc causes a corresponding rotation of the torque limiter housing and rotation of the torque limiter housing causes a corresponding rotation of the shifting shaft.

3. The torque limiter assembly of claim 1 or claim 2, wherein the disc assembly is disposed within the torque limiter housing such that the at least one input disc is configured to rotate independently of the rotation of the torque limiter housing.

4. The torque limiter assembly of claim 3, wherein the at least one output disc includes a plurality of protrusions extending around an outer periphery of the at least one output disc and the torque limiter housing includes a plurality of slots for engaging the plurality of protrusions of the at least one output disc for operatively connecting the torque limiter housing to the at least one output disc.

5. The torque limiter assembly of any of claims 1 to 4, wherein a distal end of the spline shaft includes a plurality of protrusions and the at least one input disc includes an aperture having a plurality of corresponding notches, each of the plurality of notches of the at least one input disc being configured to be inserted into one of the plurality of protrusions of the distal end of the spline shaft for operatively connecting the at least one input disc to the spline shaft.

6. The torque limiter assembly of any of claims 1 to 5, wherein the disc assembly includes a plurality of input discs, a plurality of output discs, and a plurality of friction discs, each of the plurality of input discs and plurality of output discs having one of the plurality of friction discs disposed therebetween.

7. The torque limiter assembly of any of claims 1 to 6, wherein the spline shaft includes a hollow interior, the torque limiter assembly further including an adjustment bolt positioned within the hollow interior of the spline shaft, the adjustment bolt including a proximal end having a tool engaging mechanism dimensioned and configured to traverse a frame of the motorized pool cover system for rotating the adjustment bolt independently of the spline shaft and a distal end operatively connected to the torque coupler such that rotation of the adjustment bolt is operable to adjust the torque threshold of the torque coupler.

8. The torque limiter assembly of claim 7, wherein the torque limiter assembly further includes an adjustment nut disposed adjacent a second end of the disc assembly, the adjustment nut operatively connected to the distal end of the adjustment bolt such that rotation of the adjustment bolt is operable to adjust the torque threshold of the torque coupler by adjusting a compression force between the at least one input disc, the at least one output disc, and the at least one friction disc of the disc assembly.

9. A drive motor system for a pool cover, the drive motor system comprising:
a drive motor;
a torque limiter assembly, the torque limiter assembly including:
a spline shaft having a proximal end and a distal end, the spline shaft operatively connected to the drive motor adjacent the proximal end for rotating the spline shaft, and
a torque coupler operatively connected to the spline shaft adjacent the distal end of the spline shaft, the torque coupler including a drive mechanism, a driven mechanism, and a torque threshold such that rotation of the spline shaft causes a corresponding rotation of the drive mechanism and, so long as the torque threshold is not exceeded, rotation of the drive mechanism causes a corresponding rotation of the driven mechanism;
a shifting gear assembly including a shifting shaft having a proximal end operatively connected to the torque coupler such that rotation of the driven mechanism is operable to rotate the shifting shaft; and
a rope reel operatively connected to the shifting gear assembly such that rotation of the shifting shaft is operable to rotate the rope reel,
wherein the torque coupler is positioned substantially within a hollow interior of the rope reel.

10. The drive motor system of claim 9, wherein the shifting gear assembly is positioned substantially within the hollow interior of the rope reel.

11. The drive motor system of claim 9 or claim 10, wherein the spline shaft of the torque limiter assembly includes a hollow interior, the torque limiter assembly further including an adjustment bolt positioned within the hollow interior of the spline shaft, the adjustment bolt including a proximal end having a tool engaging mechanism dimensioned and configured to traverse a frame of the drive motor system for rotating the adjustment bolt independently of the spline shaft and a distal end operatively connected to the torque coupler such that rotation of the adjustment bolt is operable to adjust the torque threshold of the torque coupler.

12. The drive motor system of claim 11, wherein the torque limiter assembly further includes an adjustment nut disposed adjacent a second end of the torque coupler, the adjustment nut operatively connected to the distal end of the adjustment bolt such that rotation of the adjustment bolt is operable to adjust the torque threshold of the torque coupler.

13. The drive motor system of any of claims 9 to 12, wherein the torque coupler further includes a disc assembly including a plurality of input discs for forming the drive mechanism, a plurality of output discs for forming the driven mechanism, and a plurality of friction discs, each of the plurality of input discs and plurality of output discs having one of the plurality of friction discs disposed therebetween.

14. The drive motor system of claim 13, wherein the torque limiter assembly further includes a torque limiter housing operatively connected to the plurality of output discs and the shifting shaft such that rotation of the plurality of output discs causes a corresponding rotation of the torque limiter housing and rotation of the torque limiter housing causes a corresponding rotation of the shifting shaft.

15. The drive motor system of claim 13 or claim 14, wherein the disc assembly is disposed within the torque limiter housing such that the plurality of input discs and the plurality of friction discs are configured to rotate independently of the rotation of the torque limiter housing.
